(19)

**Europäisches Patentamt**
**European Patent Office**
**Office européen des brevets**

(11) **EP 4 322 428 A1**

(12) **EUROPEAN PATENT APPLICATION**

(43) Date of publication:
**14.02.2024 Bulletin 2024/07**

(21) Application number: **22189506.3**

(22) Date of filing: **09.08.2022**

(51) International Patent Classification (IPC):
**H04J 14/02** (2006.01)

(52) Cooperative Patent Classification (CPC):
**H04J 14/026**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hochschule für angewandte Wissenschaften München**
**80335 München (DE)**

(72) Inventor: **Striegler, Arne**
**81476 München (DE)**

(74) Representative: **Lucke, Andreas**
**Boehmert & Boehmert**
**Anwaltspartnerschaft mbB**
**Pettenkoferstrasse 22**
**80336 München (DE)**

(54) **A METHOD AND SYSTEM FOR DETERMINING A BITRATE ALLOCATION OF A PLURALITY OF OPTICAL CHANNELS IN AN OPTICAL TRANSMISSION LINK**

(57)     A method for determining a bitrate allocation of a plurality of optical channels in an optical transmission link with discretized channel bitrates, the method comprising determining an initial discretized bitrate allocation and a corresponding initial power allocation for the plurality of optical channels for supporting the initial discretized bitrate allocation with the proviso that all optical channels meet a pre-defined optical signal-to-noise, OSNR, threshold for the respective initial discretized bitrate allocated to the respective optical channel; starting from the initial power allocation, varying, for an investigated optical channel of the plurality of optical channels, a channel power of the investigated optical channel to estimate a highest supported discretized bitrate for the investigated optical channel, wherein the highest supported discretized bitrate is the highest discretized bitrate for which the investigated optical channel meets a corresponding OSNR threshold; including the investigated optical channel in an upgrade candidate subset of the plurality of optical channels for potential bitrate upgrades based on the highest supported discretized bitrate exceeding the initial discretized bitrate for the investigated optical channel; and providing the upgrade candidate subset to an upgrade allocation algorithm.

determining an initial discretized bitrate allocation and a corresponding initial power allocation for the plurality of optical channels for supporting the initial discretized bitrate allocation with the proviso that all optical channels meet a pre-defined SNR threshold for the respective initial discretized bitrate allocated to the respective optical channel — S10

starting from the initial power allocation, varying, for an investigated optical channel of the plurality of optical channels, a channel power of the investigated optical channel to estimate a highest supported discretized bitrate for the investigated optical channel — S12

including the investigated optical channel in an upgrade candidate subset of the plurality of optical channels for potential bitrate upgrades based on the highest supported discretized bitrate exceeding the initial discretized bitrate for the investigated optical channel — S14

providing the upgrade candidate subset to an upgrade allocation algorithm — S16

Fig. 2

EP 4 322 428 A1

**Description**

FIELD OF THE INVENTION

The present invention is in the field of optical data transmission. More precisely, the present invention relates to the allocation of discretized bitrates to optical channels of an optical transmission link.

BACKGROUND

Optical transmission links can transmit optical signals between a sender and a receiver for enabling data communication at high data rates. Optical transmission links generally comprise optical fibers routing the optical signals and amplifiers for maintaining an optical power level of the optical signal routed through the fibers. Each optical transmission link usually implements a plurality of optical channels, which can be distinguished based on their spectral characteristics. In wavelength division multiplexing (WDM) different optical channels are distinguished based on their respective wavelengths. In operation, a plurality of optical signals are generated at the different wavelengths and are multiplexed to transmit the optical channels in parallel through the optical transmission link, allowing for high bandwidth communications.

The total data rate through the optical transmission link is mainly bounded by two competing effects, which can be attributed to amplifier noise and non-linear noise induced by non-linear fiber effects, which both lead to a signal power dependent optical signal-to-noise ratio (OSNR) for optical signals recorded at the optical receiver. At low signal power, the amplifier noise is usually dominant and limits the maximum bit rate for each channel. At high signal power, non-linear effects, and in particular non-linear inter- and intra-channel effects, limit the maximum OSNR achievable and thereby the achievable bitrate for communication via the optical transmission link. Specifically, for a given bit rate, the optical channel needs to achieve a corresponding required OSNR at the receiver, such that the optical signal can be distinguished from the noise, and the bit rate at each channel is accordingly limited by the achievable OSNR of that channel.

Due to the non-linear fiber effects, an increase of power in one optical channel, can negatively impact the OSNR in the other optical channels. Further, the bitrate of optical channels is generally discretized due to technical considerations regarding the technical components involved in signal transmission.

Accordingly, maximizing the total bitrate through an optical transmission link can be considered a discrete optimization problem for the individual data rates and channel powers of each optical channel, at which communication is feasible in view of the power-dependent non-linear noise. Although the inter-channel nonlinear noise is generally considered well represented by numerical models, such as the Gaussian noise, GN, model (P. Poggiolini et al., "Analytical results on system maximum reach increase through symbol rate optimization"), the resulting optimization problem is still hard for state-of-the-art optical transmission links with a large number of optical channels.

Ian Roberts and Joseph M. Kahn ("Efficient Discrete Rate Assignment and Power Optimization in Optical Communication Systems Following the Gaussian Noise Model") disclose computationally efficient heuristics for solving the discrete-rate capacity optimization problem for optical fiber communication systems. Starting from a numeric continuous rate solution for optimally allocating power and bitrates to a set of channels, truncated rates are determined for each optical channel, corresponding to the next lowest discretized bitrate for each continuous rate. Then, bitrate upgrades are assigned at random to the optical channels, and varied to determine a feasible allocation of bitrate upgrades with the highest total bitrate by numerically estimating associated channel powers and determining resulting OSNR margins for each possible allocation of bitrate upgrades.

SUMMARY OF THE INVENTION

However, the known methods generally rely on numerically solving a large number of optimization problems, such as the minimum margin problem, which can be infeasible for complex optical transmission systems and can limit the application to live WDM systems.

In view of this state-of-the-art, the object of the invention is to provide a fast and robust method for optimally allocating bitrates and channel powers to a plurality of optical channels of an optical transmission link.

This object is solved by a method, a computer program and a system according to the independent claims. The dependent claims relate to preferred embodiments.

According to a first aspect, the invention relates to a method for determining a bitrate allocation of a plurality of optical channels in an optical transmission link with discretized channel bitrates. The method comprises determining an initial discretized bitrate allocation and a corresponding initial power allocation for the plurality of optical channels for supporting the initial discretized bitrate allocation with the proviso that all optical channels meet a pre-defined optical-signal-to-noise, OSNR, threshold for the respective initial discretized bitrate allocated to the respective optical channel. The method further comprises, starting from the initial power allocation, varying, for an investigated optical channel of the plurality of optical channels, a channel power of the investigated optical channel to estimate a highest supported discretized bitrate for the investigated optical channel, wherein the highest supported discretized bitrate is the highest discretized bitrate for which the investigated optical channel meets a corresponding OSNR threshold. The method further comprises including the investigated optical channel in an upgrade candidate subset of the plurality of optical channels for potential bitrate upgrades based on the highest supported discretized bitrate exceeding the initial discretized bitrate for the investigated optical channel, and providing the upgrade candidate subset to an upgrade allocation algorithm.

Determining an initial discretized bitrate allocation and a corresponding initial power allocation may not require the solution of a minimum margin problem with respect to the optimal bitrate allocation. Rather, the initial discretized bitrate allocation may be a conservative initial guess for a bitrate allocation, e.g. a highest bitrate allocation based on the constraints that the bitrates and/or the channel powers of the optical channels are the same. Starting from the initial discretized bitrate allocation, the method can determine upgrade candidates which have a potential to increase their respective bitrates based on the initial discretized bitrate allocation.

As a result, only a fraction of the optical channels may be considered for bitrate upgrades, such that the amount of optimization problems as part of the bitrate allocation can be reduced. Since the method also estimates the highest supported discretized bitrate for each investigated optical channel, the subsequent upgrade allocation algorithm may also be rendered more efficient, e.g. by providing an upgrade order to the upgrade allocation algorithm likely to lead to a high quality solution, wherein the upgrade order can be based on the highest supported discretized bitrate. The varying of the channel power and OSNR determination may be computationally faster than solving an optimization problem on a processing system, and may also be performed in a live system, which can increase the applicability of the method to live WDM systems, at least for a portion of the steps. The OSNR may be defined as an optical signal power divided by a noise power recorded at an optical receiver, and may be determined numerically, e.g. based on simulations of the optical transmission link, and/or empirically, e.g. based on measurements in a live WDM system.

As a result, the method can reduce the computational effort to determine high (maximum) total bitrate allocations with an algorithm as part of a computer-implemented method. Additionally or alternatively, the method can be at least partially executed on a live system, such as to provide a fast and versatile method for bitrate allocation in an optical transmission link.

In preferred embodiments, the channel powers of the other optical channels of the plurality of optical channels are fixed while varying the channel power of the investigated optical channel to estimate the highest supported discretized bitrate for the investigated optical channel.

The method may not vary or redetermine the required channel powers as part of determining the highest supported discretized bitrate for the investigated optical channel. Rather, the highest supported discretized bitrate for the investigated optical channel may be a theoretical value for the investigated optical channel, which may indicate the OSNR margin for the investigated optical channel, e.g. in terms of potential bitrate upgrade steps, starting from the initial discretized bitrate allocation and associated initial power allocation.

In some embodiments, the channel powers of the other optical channels are fixed at the respective values of the initial power allocation while varying the channel power of the investigated optical channel.

If the highest supported discretized bitrate for the investigated optical channel is not higher than the bitrate allocated to the investigated optical channel in the initial discretized bitrate allocation, then the investigated optical channel may be safely excluded from the upgrade candidate set, when upgrading from the initial discretized bitrate allocation.

In preferred embodiments, the step of varying the channel power of the investigated channel to estimate the highest supported discretized bitrate for the investigated optical channel is performed for a plurality of investigated optical channels, and in particular for each optical channel of the plurality of optical channels.

As a result, the suitability of each of the optical channels for bitrate upgrades from the initial discretized bitrate allocation may be determined in a first step and may be used to determine the upgrade candidate set and optionally an upgrade order or upgrade step height for the upgrade allocation algorithm.

In preferred embodiments, the highest supported discretized bitrate for the investigated optical channel is estimated by estimating a maximum value of an OSNR for the investigated channel as a function of channel power, and determining the highest discretized bitrate for which a required OSNR can be met based on the maximum value of the OSNR.

In other words, the method may determine a maximum of a function of the OSNR of the investigated optical channel with respect to channel power. The maximum maybe determined by continuously varying the channel power while monitoring the associated OSNR, by fitting the function based on a plurality of OSNR values for different channel powers, and/or based on an iterative search algorithm indicating optimal power values for estimating the maximum.

In preferred embodiments, the maximum value of the OSNR is determined based on determining the OSNR of the investigated optical channel for a plurality of channel powers in a channel power interval, in particular according to an iterative search for finding the maximum value of the OSNR in the channel power interval.

For example, the channel power of the investigated optical channel may be varied according to a golden section search in the channel power interval, wherein the channel power interval may be pre-determined or maybe adjusted in an empirical manner.

As a result, the upgrade candidate subset as well as the suitability of each optical channel for bitrate upgrades (and their maximum step size) may be determined in a computationally efficient manner based on the initial discretized bitrate allocation.

The initial discretized bitrate allocation may be determined based on historical optimization results for similar transmission links, such as a conservative guess of feasible bitrates.

As another example, the initial discretized bitrate may be determined as a conservative guess based on continuous solution to the problem of optimally assigning bitrates and associated channel powers to the optical channels, such as truncated rates for a continuous solution to the optimum bitrate and channel power allocation problem. The continuous solution may be determined based on a numerical simulation of the WDM system and a gradient descent algorithm, and may be similar to the optimum discretized bitrate allocation for small bitrate steps. As a result, the truncated rates with respect to the optimal continuous solution may provide an initial discretized bitrate allocation which is associated with a comparably low number of additional bitrate upgrades towards an optimal solution.

In some embodiments, the initial discretized bitrate allocation may correspond to truncated bitrates derived from an optimized power allocation with continuous bitrates, and the initial power allocation is chosen to support the initial discretized bitrate allocation.

In some embodiments, the initial discretized bitrate allocation corresponds to an optimal bitrate allocation under additional constraints, such that the initial discretized bitrate allocation may be efficiently determined, but may be close to an allocation associated with a maximum total bitrate.

For example, the channel powers of the plurality of optical channels for the initial power allocation may be associated with a channel power distribution, such that relative channel powers may remain fixed while determining the initial power allocation. For example, channel power ratios with respect to a reference channel power may be defined as part of the channel power distribution, and the other channel powers may be varied with the reference channel power according to the channel power ratios as part of determining the initial power allocation. Additionally or alternatively, channel power offsets with respect to the reference channel power may be defined as part of the channel power distribution, such that by varying the reference channel power, the other channel powers maybe varied in parallel according to the sum of the reference channel power and their respective channel power offset.

In some embodiments, the initial power allocation imposes equal channel power for all optical channels.

Determining the initial discretized bitrate allocation may then comprise varying the channel power of the plurality of optical channels according to the channel power distribution and monitoring an OSNR of the plurality of optical channels. The channel powers of the plurality of optical channels may be varied until an OSNR maximum of at least one the plurality of channels with respect to the variation of the channel powers may be determined. For example, the channel powers may be increased until a derivative of the OSNR as a function of channel power for one channel approaches zero or is negative. The resulting OSNR distribution as a function of channel power may be used to determine the initial discretized bitrate allocation.

For example, the OSNRs of the plurality of channels in the investigated channel power window may be compared to a required OSNR for discretized bitrates, and the highest discretized bitrate, for which a required OSNR is smaller than the current OSNR, may be selected for all optical channels as the initial discretized bitrate allocation.

In preferred embodiments, determining the initial discretized bitrate allocation for the plurality of optical channels comprises determining a highest supported discretized bitrate for the plurality of optical channels with the proviso that the channel power of the plurality of optical channels is the same.

For example, a highest common discretized bitrate may be selected for all optical channels of the plurality of channels based on the OSNR achieved by the optical channels in the investigated channel power window, such that the highest common discretized bitrate can be satisfied by all optical channels of the plurality of optical channels with respect to a corresponding required OSNR.

In preferred embodiments, determining the initial discretized bitrate allocation for the plurality of optical channels comprises estimating a maximum value of an OSNR for the plurality of optical channels as a function of uniform channel power for the plurality of optical channels, and determining a highest discretized bitrate for which a required OSNR can be met by the plurality of optical channels based on the maximum value of the OSNR.

The highest discretized bitrate may be determined for each of the optical channels, or may be determined based on the optical channel with the lowest maximum value of the OSNR.

For example, the initial discretized bitrate allocation may be the same discretized bitrate for all optical channels of the plurality of optical channels, and may be determined based on the lowest maximum value of the OSNR for the plurality of optical channels, i.e. by selecting the highest discretized bitrate which can be achieved with the lowest maximum value of the OSNR, e.g. based on the next lowest required OSNR. Subsequently, the channel power of the optical channels maybe adjusted to a power value associated with the required OSNR, e.g. by selecting a common channel power value at which the optical channel with the lowest maximum value of the OSNR can achieve the required OSNR, or by selecting channel powers for each optical channel at which the optical channels can achieve the required OSNR with a minimal excess OSNR margin.

As another example, each optical channel of the plurality of optical channels may be assigned a respective highest discretized bitrate based on the OSNR achieved by the respective optical channels in a channel power window in which all optical channels can meet their respective highest discretized bitrate and/or in which the OSNR of all optical channels is a substantially monotonically increasing function of channel power, e.g. by bounding a derivative value of the OSNR of each of the optical channels as a function of channel power and therefrom determining the channel power window, when the channel power of the optical channels is varied collectively.

After determining the initial discretized bitrate allocation, a corresponding initial power allocation may be determined, which may include reducing the channel powers of the plurality of channels to respective truncated channel powers, wherein the truncated channel powers may be selected to result in an OSNR for each channel which may be at or close to the required OSNR for the discretized bitrate allocated to each optical channel. The truncated channel powers for the plurality of optical channels may form the initial power allocation.

Starting from the initial power allocation, the channel power of an investigated optical channel of the plurality of optical channels may be varied to determine the respective highest supported discretized bitrate and/or the maximum OSNR for the investigated channel, wherein the channel powers of the other optical channels may be fixed.

In preferred embodiments, the investigated optical channel is excluded from the upgrade candidate subset, when the highest supported discretized bitrate does not exceed the initial discretized bitrate for the investigated optical channel.

Hence, the upgrade candidate set may be reduced to the optical channels whose OSNR can theoretically be increased to a value which supports a higher discretized bitrate than the bitrate allocated by the initial discretized bitrate allocation, such that a complexity of a subsequent upgrade allocation may be efficiently reduced.

Both the maximum OSNR and the highest supported discretized bitrate obtained as part of varying the channel power of the investigated optical channel may be recorded, e.g. to determine a maximum upgrade step allocation and upgrade priority (e.g. upgrade order) for an upgrade allocation algorithm.

In preferred embodiments, the method comprises providing the upgrade candidate subset and the respective highest supported discretized bitrate for the optical channels in the upgrade candidate subset to the upgrade allocation algorithm.

The highest supported discretized bitrate for the optical channels in the upgrade candidate subset may be provided in the form of a maximum upgrade step for each optical channel, e.g. an integer number indicating the theoretical maximum number of discretized upgrade steps useful for the respective channel, under the assumption that the channel powers of the other optical channels remain at the initial power allocation.

In preferred embodiments, the upgrade allocation algorithm iteratively upgrades the optical channels in the upgrade candidate subset based on their respective highest supported discretized bitrate.

For example, the upgrade allocation algorithm may determine an upgrade order for the optical channels in the upgrade candidate subset based on their respective highest supported discretized bitrate, such that optical channels with the largest highest supported discretized bitrate are upgraded first.

In preferred embodiments, the upgrade allocation algorithm determines an upgrade order by ordering the optical channels in the upgrade candidate subset based on their respective highest supported discretized bitrate and/or a maximum value of an OSNR for the investigated channel as a function of channel power, and upgrades the optical channels according to the upgrade order.

Additionally or alternatively, the upgrade allocation algorithm may determine a maximum upgrade step for the optical channels in the upgrade candidate subset, e.g. an integer number of discretized bitrate steps between the respective highest supported discretized bitrate and the initial discretized bitrate according to the initial discretized bitrate allocation.

In preferred embodiments, the upgrade allocation algorithm determines a maximum upgrade step for each optical channel of the upgrade candidate subset based on a difference between the respective initial discretized bitrate and the highest supported discretized bitrate for that optical channel.

The maximum upgrade step and/or the upgrade order may subsequently be used to determine an upgrade step allocation to the optical channels in the upgrade candidate subset.

In preferred embodiments, the upgrade allocation algorithm iteratively upgrades a currently upgraded optical channel of the upgrade candidate subset by the respective maximum upgrade step and determines a feasibility of a resulting upgraded bitrate allocation by determining whether the other optical channels can support their respective allocated discretized bitrate based on a required OSNR for the allocated discretized bitrate, and reduces the maximum upgrade step for the currently upgraded optical channel by one discretized bitrate step, if the upgraded bitrate allocation is determined to be not feasible, or changes the currently upgraded optical channel, if the maximum upgrade step is reduced to zero or if the upgraded bitrate allocation is determined to be feasible.

According to a second aspect, the invention relates to a system for determining a bitrate allocation of a plurality of optical channels in an optical transmission link with discretized channel bitrates comprising a processing system configured to implement the method according to the first aspect.

The system may implement the method according to the first aspect or any combination of its embodiments.

The processing system may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like. The processing system may execute a numerical model of a WDM system and/or and optical transmission link. Additionally or alternatively, the processing system may send control signals to components of a WDM system and may receive measurement results of components of the WDM system as part of implementing the method.

According to a third aspect, the invention relates to a non-transitory medium comprising machine-readable instructions, which, when executed by a processing system, implement a method according to the first aspect, or a system according to the second aspect.

## DETAILED DESCRIPTION OF EMBODIMENTS

The features and numerous advantages of the methods and system according to the present invention will best be understood from a detailed description of preferred embodiments with reference to the accompanying drawings, in which:

Fig. 1      schematically illustrates an example of a WDM system with an optical transmission link;

Fig. 2      illustrates a flowchart of an example of a method for determining a discretized bitrate allocation in a WDM system;

Fig. 3      illustrates OSNR curves as a function of channel power for a commonly varied channel power for all optical channel as well as individually varied channel power for a simulated example of a WDM system;

Fig. 4      illustrates OSNR curves as a function of channel power for individually varied channel power for two simulated examples of WDM systems;

Fig. 5      illustrates a flowchart of an upgrade allocation algorithm according to an example;

Fig. 6A      illustrates an example of a distribution of a highest supported discretized bitrate;

Fig. 6B, 6C      illustrates an exemplary upgrade allocation subset provided as a channel order and bitrate assignment table for the distribution of the highest supported discretized bitrate shown in Fig.6A; and

Fig. 7A-C      schematically illustrate intermediate discretized bitrate allocations obtainable by applying the algorithm illustrated in Fig. 5 to the example shown in Figs. 6A-C.

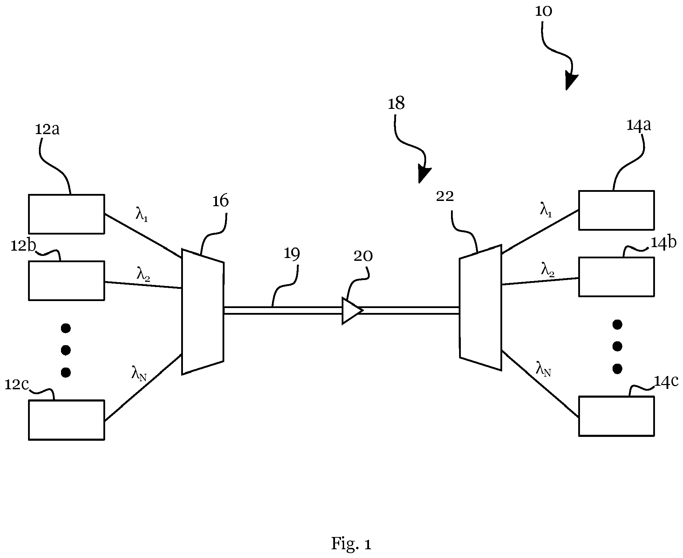

Fig. 1 schematically illustrates an example of a wavelength division multiplexing, WDM, system 10. The system 10 comprises a plurality of input transponders 12a-c for modulating a carrier signal at a corresponding plurality of wavelengths $\lambda_1$-$\lambda_N$ to generate optical signals, and a plurality of output transponders 14a-c for receiving the optical signals at the respective wavelengths $\lambda_1$-$\lambda_N$. The optical signals generated by the input transponders 12a-c at the wavelengths $\lambda_1$-$\lambda_N$ can be multiplexed with a multiplexer 16 to transmit the optical signals through an optical transmission link 18. The optical transmission link 18 may comprise optical fibers 19 for guiding the optical signals along a signal path as well as amplifiers 20 for amplifying the optical signals along the optical transmission link 18. For example, the amplifiers 20 may comprise fiber amplifiers, such as erbium doped fiber amplifiers (EDFA), in order to counteract a signal decay along the optical transmission link 18 through the optical fiber 19.

At the receiver, the multiplexed optical signals transmitted through the optical transmission link 18 may be demultiplexed in a demultiplexer 22 into corresponding wavelength slots associated with the wavelengths $\lambda_1$-$\lambda_N$, and may be recorded at the output transponders 14a-c.

The wavelengths $\lambda_1$-$\lambda_N$ are generally different and may define associated wavelength intervals for signal transmission. The wavelength intervals associated with the respective wavelengths $\lambda_1$-$\lambda_N$ may be considered optical channels, and each optical channel may transmit an optical signal from a corresponding input transponders 12a-c to an output transponder 14a-c substantially independently from the other optical channels associated with different wavelengths $\lambda_1$-$\lambda_N$.

The amount of information, which can be transmitted through each optical channel of a plurality of N optical channels in a given time period, may be defined in terms of a channel bitrate and is generally limited by the achievable optical signal-to-noise ratio (OSNR) of a recovered signal at the output transponders 14a-c. In state-of-the-art WDM systems 10, the optical signal power $P_{S,k}$ is measured against a noise background substantially composed of ASE EDFA noise $P_{ASE,k}$ originating from the amplifiers 20 and nonlinear noise $P_{NL,k}$ associated with nonlinear effects in the optical transmission link 18, such as nonlinear fiber effects in optical fibers 19. The non-linear noise $P_{NL,k}$ may be considered as the sum of non-linear noise originating from intrachannel effects $P_{NL,intra,k}$ and non-linear noise $P_{NL,inter,k}$ originating from neighbouring channels by interchannel effects.

The noise background may partially mask a transmitted optical signal, thereby limiting the highest possible bitrate through the optical channel, at which messages can still be successfully recorded at the receiver. The maximum bitrate for an optical channel $k \in C = \{1, ..., N\}$ out of a numbered list of optical channels C of the optical transmission link 18 can be achieved close to a condition where the optical signal-to-noise power ratio $OSNR_k$ is maximized, which may be defined as

$$OSNR_k = \frac{P_{S,k}}{P_{ASE,k} + P_{NL,k}}$$

. In an optical fiber 19, the nonlinear noise $P_{NL,k}$ is dependent on the signal power, such that generally there exists an optimal value for the optical channel power of each optical channel, which maximizes the bitrates of the optical channels. The optical channel power may be considered a channel-specific optical power, which may be varied for each optical channel, e.g. based on the input power of an optical signal emitted from a corresponding input transponder 12a-c and/or based on a channel-specific optical power amplification and/or attenuation using further optical components along the optical transmission link 18 from the input transponders 12a-c to the output transponder 14a-c.

However, non-linear fiber effects in the optical transmission link 18 generally lead to coupling of the different optical channels at the different wavelengths $\lambda_1$-$\lambda_N$, e.g. via non-linear interchannel effects giving rise to $P_{NL,inter,k}$, such that the different optical channels cannot be optimized independently. Moreover, in WDM systems 10, the available bitrates of each optical channel are generally discretized, e.g. in terms of bitrate steps of 10 Gbit/s, 25 Gbit/s, 50 Gbit/s, or 100 Gbit/s, such that finding the maximum total bitrate for an optical transmission link 18 may correspond to solving of an assignment problem of the discretized bitrates of the optical channels, which is often difficult to implement in a live system, due to a comparatively long response time of the WDM system 10 to parameter changes, and may require significant processing resources when using a numerical solver/simulating the problem.

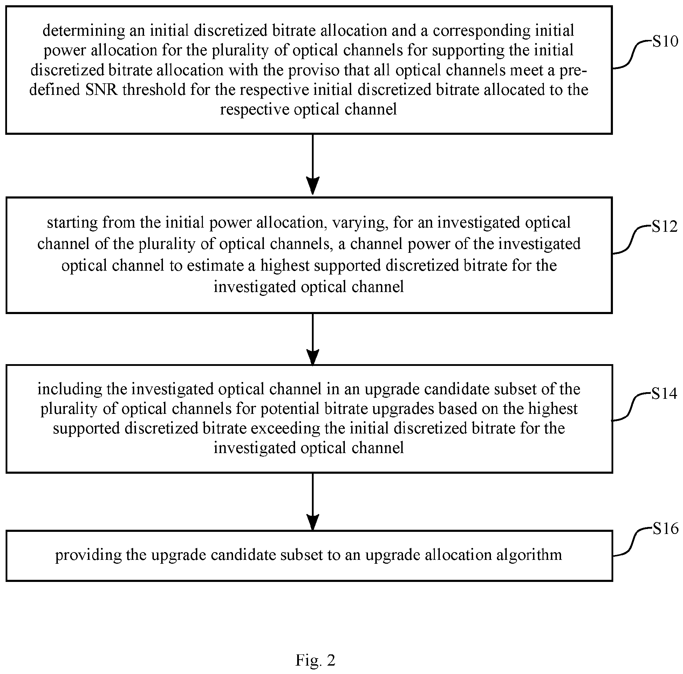

Fig. 2 illustrates an example of a method for determining a bitrate allocation of a plurality of optical channels in an optical transmission link 18 with discretized channel bitrates. The method comprises determining an initial discretized bitrate allocation and a corresponding initial power allocation for the plurality of optical channels for supporting the initial discretized bitrate allocation with the proviso that all optical channels meet a pre-defined signal-to-noise, SNR, threshold for the respective initial discretized bitrate allocated to the respective optical channel (S10). The method further comprises, starting from the initial power allocation, varying, for an investigated optical channel of the plurality of optical channels, a channel power of the investigated optical channel to estimate a highest supported discretized bitrate for the investigated optical channel, wherein the highest supported discretized bitrate is the highest discretized bitrate for which the investigated optical channel meets a corresponding OSNR threshold (S12). The method further comprises including the investigated optical channel in an upgrade candidate subset of the plurality of optical channels for potential bitrate upgrades based on the highest supported discretized bitrate exceeding the initial discretized bitrate for the investigated optical channel (S14), and providing the upgrade candidate subset to an upgrade allocation algorithm (S16).

The method may be implemented by a processing system, which may calculate and/or simulate the OSNR in response to changes of the channel power, e.g. based on the Gaussian noise model for computing the amplifier noise and/or the non-linear noise along the optical transmission link 18. Additionally or alternatively, the processing system may adjust control parameters of an optical transmission link, such as the input power for the optical signals emitted from the input transponders 12a-c, and may determine an OSNR at an output transponder 14a-c, such as to (at least partially) optimize a bitrate allocation on a live WDM system 10.

The initial discretized bitrate allocation may be close to an optimal bitrate allocation for a subset of the optical channels $k$ of the plurality of N optical channels. The initial power allocation may be selected, such that each of the channels can meet a required OSNR threshold for the bitrate allocated to that optical channel in the initial discretized bitrate allocation.

The method may determine an upgrade candidate subset from the optical channels k, for which the initial discretized bitrate allocation is likely not optimal, based on the respective highest supported discretized bitrate, which is the highest discretized bitrate for which the investigated optical channel meets a corresponding SNR threshold. The highest supported discretized bitrate may be determined for the investigated optical channel k in a non-optimized configuration, e.g. without adjusting the channel powers of the other optical channels $l \neq k$ towards an updated configuration in which all the channels meet their respective required OSNR. Rather, the channel power of the investigated optical channel may be determined by solely varying the channel power of the investigated optical channel, or by adjusting the channel powers according to a pre-determined variation pattern, which may take into account an expected channel power adjustment of the other optical channels $l \neq k$ in view of the varying of the channel power of the investigated optical channel k.

A subsequent optimization by an upgrade allocation algorithm may then focus on the optical channels in the upgrade candidate subset, whose highest supported discretized bitrate, as determined previously, exceeds the initial bitrate allocation, such as to reduce the number of attempted bitrate allocations and associated power optimization in practical implementations.

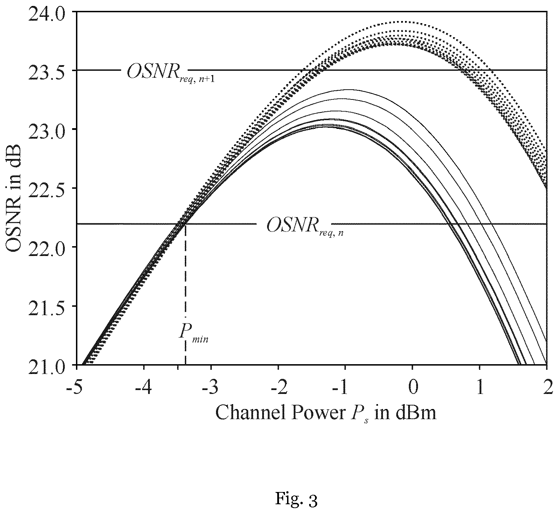

Fig. 3 illustrates curves of the simulated OSNR as a function of channel power according to the GN-model for a WDM system 10 after transmission through an optical transmission link 18.

The WDM system 10 comprises 9 channels transmitted over $19 \times 73$ km low dispersion fiber (D=2 ps/(nm km)), i.e. 19 spans of fiber sections of 73 km length and associated amplifiers 20. The solid lines illustrate the case, in which all optical channels have the same input signal power $P_{S,k} = P_S$, which is varied in parallel. The horizontal lines indicated by $OSNR_{req,n}$, $OSNR_{req,n+1}$ indicate the optical signal-to-noise ratio (OSNR), which may be required to support corresponding discretized bitrates $r_{b,n}$, $r_{b,n+1}$ of a plurality of $N_b$ discretized bitrates $r_{b,\{1,...,Nb\}}$, e.g. with a sufficient pre-FEC (forward error correction) bit error rate, at a fixed symbol rate, e.g. of 67 GHz (which will be used in the following examples).

The smallest common channel power $P_{min,req,0}$, at which all channels feature an OSNR greater than $OSNR_{req,n}$, is indicated by a vertical dashed line, situated between -3 dBm and -2 dBm.

The dotted curves in the graph illustrate the OSNR of optical channels $k$ as a function of their respective channel power, while the other optical channels $l \neq k$ are held at a fixed channel power of $P_{min,req,0}$.

By varying the channel power of all optical channels in parallel, as illustrated by the solid lines, an initial discretized bitrate allocation may be found, which may be close to an optimal bitrate allocation for a subset of the optical channels. A corresponding initial power allocation may be determined as a uniform power allocation, wherein the channel power of all optical channels is held at the value of $P_{min,req,0}$. Alternatively, a subsequent channel power optimization may be performed, e.g. by reducing the channel powers, such that all optical channels are associated with the respective smallest channel power, at which the optical channel still meets the required OSNR, $OSNR_{req,n}$, e.g. according to the values of the respective curves shown in Fig.3 for each channel or based on a iterative optimization of the channel powers.

Starting from the initial bitrate and power allocation, the channel power of an investigated optical channel may be varied, such as to determine the highest supported discretized bitrate of the investigated channel, e.g. based on the maximum of the OSNR obtained by varying the channel power. This variation can be considered to correspond to the variation according to the dotted lines in the graph in Fig. 3.

As can be seen from the evolution of the OSNR with channel power of the individual optical channels, when the channel power of the other optical channels is held at $P_{min,req,0}$ (dotted lines), only one of the optical channels can exceed $OSNR_{req,n+1}$, when its channel power is independently varied. Hence, only for that optical channel, the highest supported discretized bitrate is $OSNR_{req,n+1}$. An upgrade candidate subset may accordingly include only that channel $k$, and it may suffice to test, whether a bitrate allocation with all the other optical channels $l \neq k$ allocated, $r_{b,n}$ and that optical channel $k$ allocated $r_{b,n+1}$ is feasible based on a subsequent optimization of the channel powers of all optical channels, e.g. starting from a configuration in which the other optical channels are at $P_{min,req,0}$ and in which the upgraded optical channel is at the smallest channel power, at which the optical channel exceeds $OSNR_{req,n+1}$.

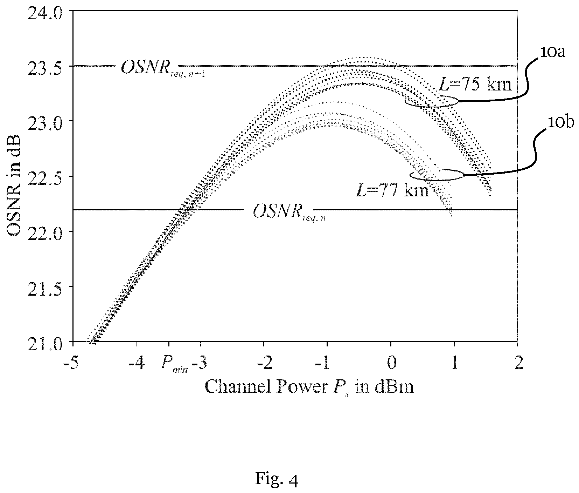

Fig.4 illustrates the evolution of OSNR with channel power $P_s$ for 9 optical channels of an optical transmission link 18 for two further examples of WDM systems 10a, 10b. The curves of the OSNR against channel power $P_s$ are identified by their respective span length L= 77 km and L= 75 km for the two different example WDM systems 10a, 10b. Each WDM system 10a, 10b comprises 19 spans associated with a respective optical fiber length L (75 km/77 km), and for each curve, the channel power $P_s$ is varied for one optical channel at a time, with the other optical channels held at $P_{min,req,0}$, which can be determined as in the example of Fig. 3 for both WDM systems 10a, 10b.

As can be seen from the curves for the WDM system 10a, a plurality of optical channels can achieve an OSNR which is greater than $OSNR_{req,n+1}$, when their channel power $P_s$ is varied individually, such that an upgrade candidate subset with multiple optical channels can be formulated. The upgrade candidate subset may then be provided to an upgrade allocation algorithm, which may test, whether by increasing the bitrate of the optical channels in the upgrade candidate subset to $OSNR_{req,n+1}$ a feasible configuration may be found, or if only a subset of the optical channels in the upgrade candidate subset may be upgraded to $OSNR_{req,n+1}$.

Conversely, in the WDM system 10b, none of the optical channels, whose channel power $P_s$ is varied individually, can achieve an OSNR which is greater than $OSNR_{req,n+1}$, such that a corresponding upgrade candidate subset may be empty. Hence, an upgrade allocation algorithm may terminate after the variation of the individual channel power $P_s$ of the optical channels, e.g. with the result that none of the optical channels can be upgraded.

In the examples illustrated in Figs. 3, 4, the optical channels could at most be upgraded by a single upgrade step, i.e. the separation of required OSNR as a result of the discretized bitrate steps in those WDM systems 10, 10a, 10b is such that, starting from the initial power allocation, the highest supported discretized bitrate exceeds the initially allocated bitrate by only a single discretized bitrate step. However, the skilled person will appreciate that the upgrade candidate subset may in principle comprise a plurality of optical channels with different respective highest supported discretized bitrates.

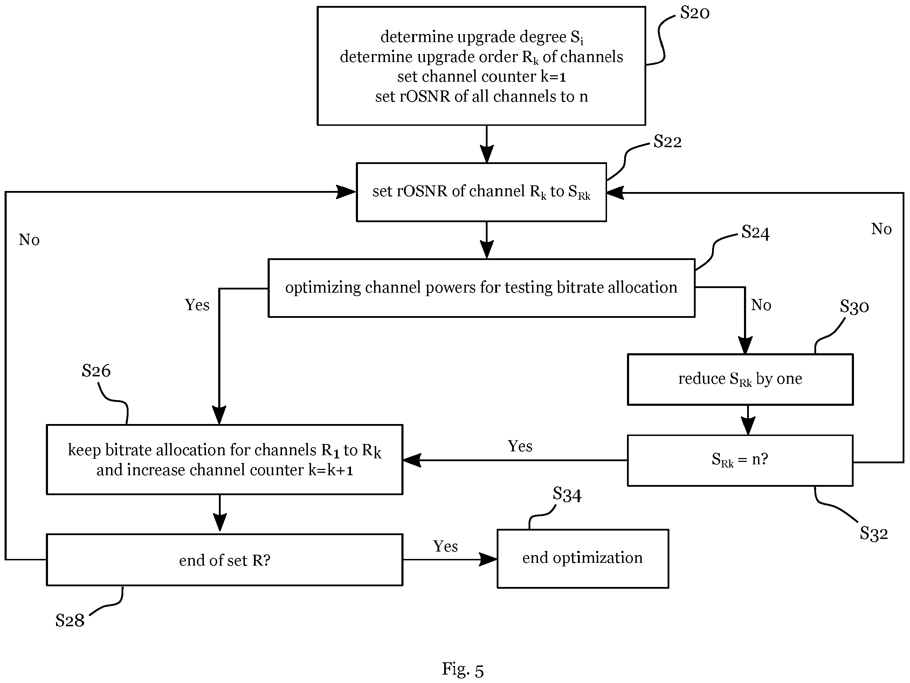

Fig. 5 illustrates a flowchart of an example method for determining a discretized bitrate allocation in a WDM system 10. The method may start with a step (S20) of determining an upgrade order $R_k$ and an upgrade degree/bitrate assignment $S_i$ for optical channels, e.g. of an upgrade candidate subset. The required OSNR (rOSNR) for all optical channels may be set to $rOSNR_n$, as part of the initial discretized bitrate allocation, e.g. as determined in the example of Fig. 3. The bitrate assignment $S_i$ may comprise information regarding the highest supported discretized bitrate for each optical channel i, and the upgrade order $R_k$ may comprise an ordered list of channel indices i for each optical channel, which may be ordered according to the highest supported discretized bitrate and/or the highest OSNR achieved by that optical channel, when the channel power $P_s$ of the optical channel is individually varied (starting from $P_{min,req,0}$).

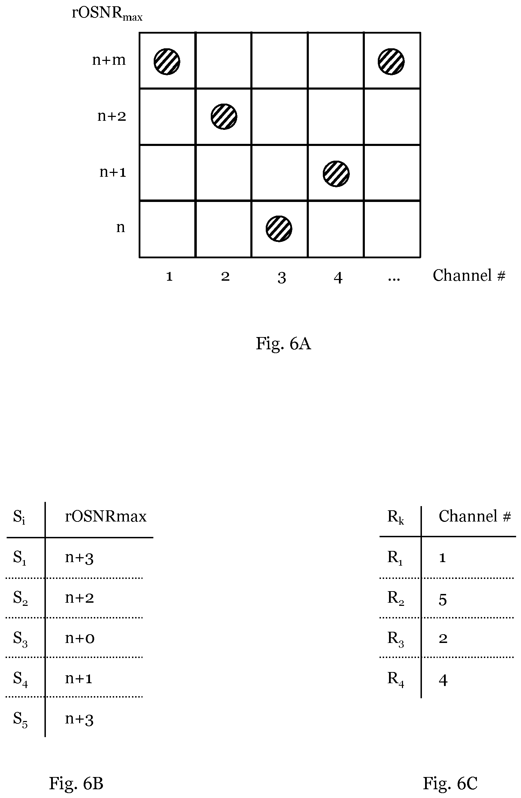

Fig. 6A illustrates an example of a table of the highest supported discretized bitrate for a plurality of optical channels numbered 1-5 in a WDM system 10, which is shown in terms of the maximum rOSNR ($rOSNR_{max}$) exceeded by that particular channel k, when the channel power $P_s$ of the optical channel k was individually varied starting from a configuration, where the other channels $l \neq k$ were held at a channel power $P_s$ to exceed $OSNR_{req,n}$, e.g. $P_{min,req,0}$.

Fig. 6B illustrates a table of a corresponding bitrate assignment $S_i$, wherein the index i indexes the channel number (Channel #) of Fig. 6A. For example, the bitrate assignment $S_1$ of the first channel (#1) is n+3, corresponding to the value of $rOSNR_{max}$ associated with the filled circle in the first column of Fig. 6A exceeding the required $OSNR_n$ for the bitrate $r_{b,n}$ by an upgrade degree of 3 discretized bitrate steps.

Fig. 6C illustrates a table of the channel upgrade order $R_k$, wherein the optical channels are ordered according to their respective $rOSNR_{max}$, wherein optical channels with the same $rOSNR_{max}$, are ordered based on their channel number. Thus, the first optical channel in the upgrade order $R_k$ is optical channel #1 (associated with $rOSNR_{max}$=n+3), the second optical channel in the upgrade order $R_k$ is optical channel #5 (associated with $rOSNR_{max}$=n+3), the third optical channel in the upgrade order $R_k$ is optical channel #2 (associated with $rOSNR_{max}$=n+2), and the fourth optical channel in the upgrade order $R_k$ is optical channel #4 (associated with $rOSNR_{max}$=n+1). The optical channel with channel number #3 may not be indexed in the upgrade order $R_k$, as it is associated with an $rOSNR_{max}$=n in the example. The upgrade order $R_k$ and/or the bitrate assignment $S_i$ may be considered to define an upgrade candidate subset in the illustrated example.

Turning back to Fig. 5, the counter k may be initialized to k=1, and the algorithm may proceed to a second step (S22), wherein the rOSNR of the currently upgraded channel $R_k$ (i.e. $R_1$=1 for k=1) is set to $S_{R_k}$ (i.e. to "n+3" for k=1/$R_1$=1).

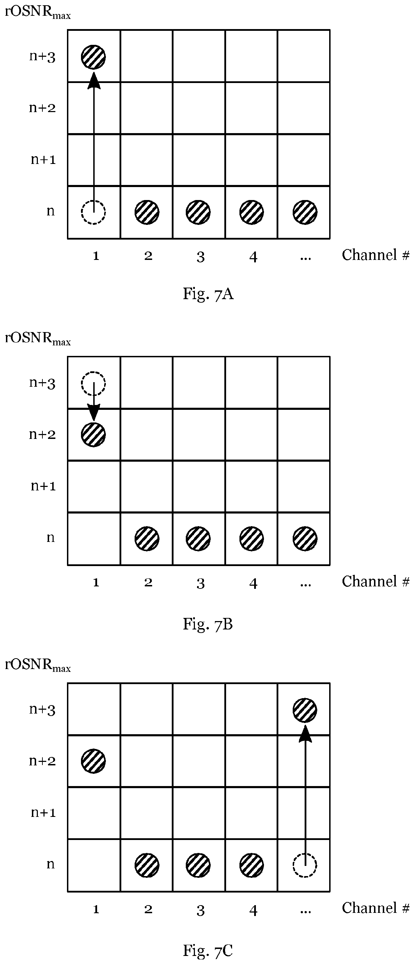

For k=1, this example situation is illustrated in Fig. 7A, wherein the rOSNR of all channels is set to n, but the rOSNR of the optical channel #1 is increased to n+3.

In a subsequent step (S24) illustrated in Fig. 5, the channel powers $P_s$ are optimized for testing a current bitrate allocation selected in step S22. For example, the channel powers $P_s$ of any of the optical channels, which do not exceed their respective currently allocated rOSNR, may be iteratively increased such that all channels meet or exceed their currently allocated rOSNR. However, the skilled person will appreciate that the optimization of the power values can be done by any known optimization algorithms, such as Nelder-Meed or Powell, and satisfying results can be received in a comparatively short time frame, e.g. when numerically simulating the WDM system 10 based on the GN-model.

If a channel power allocation is found, which satisfies the condition that all optical channels meet or exceed their currently allocated rOSNR, the current bitrate allocation may be determined feasible, and the algorithm proceeds to a step (S26), wherein the current bitrate allocation is stored as an intermediate bitrate allocation, the channel counter k is increased by one, and the algorithm repeats step S22 for the next channel in the channel order $R_k$, while maintaining any previously determined feasible bitrate upgrades, as long as the end of the channel order $R_k$ is not reached (S28).

If the current bitrate allocation is not feasible, e.g. no channel power allocation can be found, in which all optical channels satisfy their currently allocated rOSNR, the algorithm proceeds to a step (S30) in which the upgrade degree $S_{R_k}$ for the currently upgraded optical channel $R_k$ is reduced by one.

This example situation is illustrated in Fig. 7B, in which the counter k is one (k=1) and the previous current bitrate allocation is unfeasible. In the illustrated example, the rOSNR of the currently upgraded channel #1 is reduced to "n+2" (filled circle in first column) from a previously allocated value of "n+3" (dashed circle in first column).

If the upgrade degree $S_{R_k}$ of the currently upgraded channel is not reduced to "n" in step S30, the algorithm repeats step S22 with the updated value of $S_{Rk}$ for the currently upgraded channel. Otherwise, the algorithm can store the upgrade degree $S_{R_k} = n$ for the currently upgraded channel and proceeds to step S26, in which the channel counter k is increased by one, such that a subsequent optical channel in the upgrade order $R_k$ is upgraded.

Fig. 7C illustrates an example in which the bitrate allocation with the optical channel #1 allocated an rOSNR of n+2 is determined as a feasible configuration and the algorithm proceeds to upgrading the next optical channel in the upgrade order $R_k$ as the next currently upgraded channel, i.e. optical channel #5 for k=2. The upgrade degree for optical channel #5 is set to $S_5 = n + 3$, and the algorithm determines, whether the resulting bitrate allocation is feasible in step S24.

If the algorithm of Fig. 5 reaches the end of the

upgrade order $R_k$, the algorithm may terminate (S34) and the intermediate bitrate allocation can be returned as a final bitrate allocation. The inventor found that the upgrade allocation algorithm can find a discretized bitrate allocation close to an optimal discretized bitrate allocation with a comparatively low number of channel power optimization steps and comparatively low number of investigated bitrate allocations. The iterative upgrade algorithm based on the upgrade candidate subset and the highest supported discretized bitrate, e.g. based on a determined $rOSNR_{max}$ for the optical channels, may also be implemented in a live WDM system 10 and may therefore be more versatile than prior approaches.

The skilled person will however appreciate that the invention may also be implemented with other upgrade allocation algorithms, which may only implement a subset of the steps illustrated in Fig. 5, or which may be based on a combinatorial solution to an upgrade assignment problem based on the upgrade candidate subset. Moreover, the upgrade order $R_k$ may be based on different quantities, such as the maximum OSNR obtainable for an optical channel, when varying the channel power $P_s$ starting from the initial power allocation.

Further, the skilled person will appreciate that the highest supported discretized bitrate/ $rOSNR_{max}$/ maximum OSNR obtainable for an investigated channel need not be determined with certainty or high accuracy. For example, the channel power $P_s$ of the investigated channel may be varied to obtain a plurality of values of $OSNR_k$ for different channel powers $P_s$, and a corresponding value of $rOSNR_{max}$ or of a maximum OSNR obtainable for the investigated optical channel may be estimated based on extrapolation, fitting, an output of a trained machine learning model, a decision tree, a combination thereof, or the like.

Moreover, the skilled person will appreciate that the preceding examples have illustrated the invention with an example of a point-to-point fiber connection, but the invention is obviously not limited to this illustrative example. Rather, the optical transmission link 18 may be considered to include any optical signal connection between (intermediate) nodes of an optical signaling network, such as edges or components in a WDM network. For example, WDM systems 10 are often used to implement optical mesh networks, in which optical signals may be routed through a fiber network according to their optical properties, e.g. their wavelength, using optical switches, and the invention may be applied to determine a discretized bitrate allocation for any optical connection between edges in the optical mesh network.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | system |
| 12a-c | input transponders |
| 14a-c | output transponders |
| 16 | multiplexer |
| 18 | optical transmission link |
| 19 | optical fiber |
| 20 | amplifier |
| 22 | demultiplexer |

**Claims**

1. A method for determining a bitrate allocation of a plurality of optical channels in an optical transmission link (18) with discretized channel bitrates, the method comprising:

   determining (S10) an initial discretized bitrate allocation and a corresponding initial power allocation for the plurality of optical channels for supporting the initial discretized bitrate allocation with the proviso that all optical channels meet a pre-defined optical signal-to-noise, OSNR, threshold ($OSNR_{req,n}$, $OSNR_{req,n+1}$) for the respective initial discretized bitrate allocated to the respective optical channel;
   starting from the initial power allocation, varying (S12), for an investigated optical channel of the plurality of optical channels, a channel power of the investigated optical channel to estimate a highest supported discretized bitrate for the investigated optical channel, wherein the highest supported discretized bitrate is the highest discretized bitrate for which the investigated optical channel meets a corresponding OSNR threshold ($OSNR_{req,n}$, $OSNR_{req,n+1}$);
   including (S14) the investigated optical channel in an upgrade candidate subset of the plurality of optical channels for potential bitrate upgrades based on the highest supported discretized bitrate exceeding the initial discretized bitrate for the investigated optical channel; and
   providing (S16) the upgrade candidate subset to an upgrade allocation algorithm.

2. The method of claim 1, wherein the channel powers of the other optical channels of the plurality of optical channels are fixed while varying the channel power of the investigated optical channel to estimate the highest supported discretized bitrate for the investigated optical channel.

3. The method of claim 1 or 2, wherein the step of varying the channel power of the investigated channel to estimate the highest supported discretized bitrate for the investigated optical channel is performed for a plurality of investigated optical channels, and in particular for each optical channel of the plurality of optical channels.

4. The method of any one of the preceding claims, wherein the highest supported discretized bitrate for the investigated optical channel is estimated by estimating a maximum value of an OSNR for the investigated channel as a function of channel power, and determining the highest discretized bitrate for which a required OSNR ($OSNR_{req,n}$, $OSNR_{req,n+1}$) can be met based on the maximum value of the OSNR.

5. The method of claim 4, wherein the maximum value of the OSNR is determined based on determining the OSNR of the investigated optical channel for a plurality of channel powers in a channel power interval, in particular according to an iterative search for finding the maximum value of the OSNR in the channel power interval.

6. The method of any one of the preceding claims, wherein the initial discretized bitrate allocation corresponds to truncated bitrates derived from an optimized power allocation with continuous bitrates and the initial power allocation supports the initial discretized bitrate allocation; or
wherein determining the initial discretized bitrate allocation for the plurality of optical channels comprises determining a highest supported discretized bitrate for the plurality of optical channels with the proviso that the channel power of the plurality of optical channels is the same.

7. The method of any one of the preceding claims, wherein determining the initial discretized bitrate allocation for the plurality of optical channels comprises estimating a maximum value of an OSNR for the plurality of optical channels as a function of uniform channel power for the plurality of optical channels, and determining a highest discretized bitrates for which a required OSNR ($OSNR_{req,n}$, $OSNR_{req,n+1}$) can be met by the plurality of optical channels based on the maximum value of the OSNR.

8. The method of any one of the preceding claims, wherein the investigated optical channel is excluded from the upgrade candidate subset, when the highest supported discretized bitrate does not exceed the initial discretized bitrate for the investigated optical channel.

9. The method of any one of the preceding claims, wherein the method comprises providing the upgrade candidate subset and the respective highest supported discretized bitrate for the optical channels in the upgrade candidate subset to the upgrade allocation algorithm.

10. The method of any one of the preceding claims, wherein the upgrade allocation algorithm iteratively upgrades the optical channels in the upgrade candidate subset based on their respective highest supported discretized bitrate.

11. The method of any one of the preceding claims, wherein the upgrade allocation algorithm determines an upgrade order by ordering the optical channels in the upgrade candidate subset based on their respective highest supported discretized bitrate and/or a maximum value of an OSNR for the investigated channel as a function of channel power, and upgrades the optical channels according to the upgrade order.

12. The method of any one of the preceding claims, wherein the upgrade allocation algorithm determines a maximum upgrade step for each optical channel of the upgrade candidate subset based on a difference between the respective initial discretized bitrate and the highest supported discretized bitrate for that optical channel.

13. The method of claim 12, wherein the upgrade allocation algorithm iteratively upgrades a currently upgraded optical channel of the upgrade candidate subset by the respective maximum upgrade step and determines a feasibility of a resulting upgraded bitrate allocation by determining whether the other optical channels can support their respective allocated discretized bitrate based on a required OSNR ($OSNR_{req,n}$, $OSNR_{req,n+1}$) for the allocated discretized bitrate, and

reduces the maximum upgrade step for the currently upgraded optical channel by one discretized bitrate step, if the upgraded bitrate allocation is determined to be not feasible, or changes the currently upgraded optical channel, if the maximum upgrade step is reduced to zero or if the upgraded bitrate allocation is determined to be feasible.

14. A system (10, 10a, 10b) for determining a bitrate allocation of a plurality of optical channels in an optical transmission link (18) with discretized channel bitrates comprising a processing system configured to implement the method according to any one of claims 1-13.

**15.** A computer program comprising machine readable instructions, which when the computer program is executed by a processing system cause the processing system to implement a method according to any one of claims 1-13 and/or to implement a system (10, 10a, 10b) according to claim 14.

Fig. 1

| determining an initial discretized bitrate allocation and a corresponding initial power allocation for the plurality of optical channels for supporting the initial discretized bitrate allocation with the proviso that all optical channels meet a pre-defined SNR threshold for the respective initial discretized bitrate allocated to the respective optical channel | S10 |

| starting from the initial power allocation, varying, for an investigated optical channel of the plurality of optical channels, a channel power of the investigated optical channel to estimate a highest supported discretized bitrate for the investigated optical channel | S12 |

| including the investigated optical channel in an upgrade candidate subset of the plurality of optical channels for potential bitrate upgrades based on the highest supported discretized bitrate exceeding the initial discretized bitrate for the investigated optical channel | S14 |

| providing the upgrade candidate subset to an upgrade allocation algorithm | S16 |

Fig. 2

Fig. 3

Fig. 4

```
┌─────────────────────────────────┐
│ determine upgrade degree S_i     │  ⟨ S20
│ determine upgrade order R_k of   │
│       channels                   │
│ set channel counter k=1          │
│ set rOSNR of all channels to n   │
└─────────────────────────────────┘
                │
                ▼
┌─────────────────────────────────┐  ⟨ S22
│ set rOSNR of channel R_k to S_Rk │
└─────────────────────────────────┘
                │
                ▼
┌─────────────────────────────────────────────┐  ⟨ S24
│ optimizing channel powers for testing        │
│           bitrate allocation                 │
└─────────────────────────────────────────────┘
  Yes                              No
   │                                │
   │                                ▼
   │                    ┌─────────────────────┐  ⟨ S30
   │                    │ reduce S_Rk by one   │
   │                    └─────────────────────┘
   ▼                                │
┌──────────────────────────────┐    ▼
│ keep bitrate allocation for  │◀── Yes ──┌──────────────┐
│ channels R_1 to R_k          │          │  S_Rk = n?   │
│ and increase channel counter │          └──────────────┘  ⟨ S32
│ k=k+1                        │
└──────────────────────────────┘  S26
                │
                ▼
┌──────────────────────┐   Yes   ┌──────────────────┐  ⟨ S34
│    end of set R?     │ ──────▶ │ end optimization │
└──────────────────────┘         └──────────────────┘
  S28
```

Fig. 5

rOSNR$_{max}$

|  | 1 | 2 | 3 | 4 | ... |
|---|---|---|---|---|---|
| n+m | ◯ |  |  |  | ◯ |
| n+2 |  | ◯ |  |  |  |
| n+1 |  |  |  | ◯ |  |
| n |  |  | ◯ |  |  |

Channel #

Fig. 6A

| $S_i$ | rOSNRmax |
|-------|----------|
| $S_1$ | n+3 |
| $S_2$ | n+2 |
| $S_3$ | n+0 |
| $S_4$ | n+1 |
| $S_5$ | n+3 |

Fig. 6B

| $R_k$ | Channel # |
|-------|-----------|
| $R_1$ | 1 |
| $R_2$ | 5 |
| $R_3$ | 2 |
| $R_4$ | 4 |

Fig. 6C

rOSNR$_{max}$

Fig. 7A

rOSNR$_{max}$

Fig. 7B

rOSNR$_{max}$

Fig. 7C

**EUROPEAN SEARCH REPORT**

Europäisches
Patentamt
European
Patent Office
Office européen
des brevets

Application Number

EP 22 18 9506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROBERTS IAN ET AL: "Efficient Discrete Rate Assignment and Power Optimization in Optical Communication Systems Following the Gaussian Noise Model", JOURNAL OF LIGHTWAVE TECHNOLOGY, [Online] vol. 35, no. 20, 15 October 2017 (2017-10-15), pages 4425-4437, XP093016022, USA ISSN: 0733-8724, DOI: 10.1109/JLT.2017.2744624 Retrieved from the Internet: URL:http://ieeexplore.ieee.org/ielaam/50/8060637/8016579-aam.pdf> [retrieved on 2023-01-20] | 1-12,14, 15 | INV. H04J14/02 |
| A | * Part II, Part III.A; figure 3 * | 13 | |
| A | ROBERTS IAN ET AL: "Convex Channel Power Optimization in Nonlinear WDM Systems Using Gaussian Noise Model", JOURNAL OF LIGHTWAVE TECHNOLOGY, IEEE, USA, vol. 34, no. 13, 1 July 2016 (2016-07-01), pages 3212-3222, XP011615689, ISSN: 0733-8724, DOI: 10.1109/JLT.2016.2569073 [retrieved on 2016-06-30] * the whole document * | 1-15 | |
| A | US 2021/344418 A1 (CROGNALE CLAUDIO [IT] ET AL) 4 November 2021 (2021-11-04) * paragraph [0049] – paragraph [0053]; figure 2 * | 1-15 | |

TECHNICAL FIELDS SEARCHED     (IPC)

H04J

-/--

The present search report has been drawn up for all claims

| Place of search | Date of completion of the search | Examiner |
|---|---|---|
| Munich | 24 January 2023 | Borsier, Celine |

EPO FORM 1503 03.82 (P04C01)

page 1 of 2

Europäisches
Patentamt

European
Patent Office

Office européen
des brevets

# EUROPEAN SEARCH REPORT

**Application Number**

**EP 22 18 9506**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2012/025148 A1 (ERICSSON TELEFON AB L M [SE]; SAMBO NICOLA [IT] ET AL.) 1 March 2012 (2012-03-01) * page 6, line 10 – page 11, line 15; figure 1 * ----- | 1-15 | |
| A | US 10 700 807 B1 (VASSILIEVA OLGA I [US] ET AL) 30 June 2020 (2020-06-30) * column 27, line 14 – column 28, line 64; figure 12 * ----- | 1-15 | |

TECHNICAL FIELDS
SEARCHED        (IPC)

The present search report has been drawn up for all claims

| Place of search | Date of completion of the search | Examiner |
|---|---|---|
| Munich | 24 January 2023 | Borsier, Celine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 22 18 9506**

**24-01-2023**

| Patent document cited in search report | | Publication date | Patent family member(s) | | Publication date |
|---|---|---|---|---|---|
| US 2021344418 | A1 | 04-11-2021 | NONE | | |
| WO 2012025148 | A1 | 01-03-2012 | CN | 103053126 A | 17-04-2013 |
| | | | EP | 2609702 A1 | 03-07-2013 |
| | | | WO | 2012025148 A1 | 01-03-2012 |
| US 10700807 | B1 | 30-06-2020 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. POGGIOLINI et al.** *Analytical results on system maximum reach increase through symbol rate optimization*

- **IAN ROBERTS ; JOSEPH M. KAHN.** *Efficient Discrete Rate Assignment and Power Optimization in Optical Communication Systems Following the Gaussian Noise Model*